# EUROPÄISCHE PATENTSCHRIFT

(11) **EP 3 296 372 B1**
(45) Veröffentlichungstag und Bekanntmachung des Hinweises auf die Patenterteilung: **04.03.2020**
(21) Anmeldenummer: 16189515.6
(22) Anmeldetag: 19.09.2016
(51) Int. Cl.: C09D 163/10, C09D 167/08

(54) **LÖSEMITTELHALTIGE BESCHICHTUNGSMASSE**
SOLVENT-CONTAINING COATING COMPOSITION
MASSE DE REVETEMENT SOLVANTEE

(43) Veröffentlichungstag der Anmeldung: 21.03.2018
(73) Patentinhaber: DAW SE, 64372 Ober-Ramstadt (DE)
(72) Erfinder: HERRMANN, Beatrix, 64291 Darmstadt (DE)
(74) Vertreter: Metten, Karl-Heinz

(56) Entgegenhaltungen:
- EP-A1- 2 474 578
- EP-A1- 2 784 130
- EP-A1- 3 037 464
- EP-A2- 1 394 230
- WO-A1-2011/157673

## Beschreibung

Die vorliegende Erfindung betrifft eine lösemittelhaltige Beschichtungsmasse und ein Beschichtungssystem enthaltend diese lösemittelhaltige Beschichtungsmasse. Ferner betrifft die Erfindung einen Kit-of-Parts für ein Beschichtungssystem enthaltend die lösemittelhaltige Beschichtungsmasse sowie die Verwendung dieser lösemittelhaltigen Beschichtungsmasse für die Herstellung von Lackbeschichtungen.

Lackbeschichtungen für Außenanwendungen, beispielsweise auf Metall- oder Holzsubstraten, sind regelmäßig vielfältigen, mitunter sehr harschen Witterungsbedingungen ausgesetzt. Derartige Beschichtungen haben dabei mechanischen Einflüssen ebenso unbeschadet zu widerstehen wie Beeinträchtigungen durch Feuchtigkeit und UV-Strahlung, und zwar ohne Einbußen bei dem gewünschten, ursprünglich vorliegenden optischen Erscheinungsbild in Kauf nehmen zu müssen, auch nicht über einen längeren Nutzungszeitraum. Darüber hinaus wird nicht selten gefordert, dass sich die diese Beschichtungen liefernden Beschichtungsmassen einfach und unproblematisch applizieren lassen und zudem zügig unter Ausbildung einer glatten, hochwertigen Oberfläche abtrocknen. Um einen dauerhaften, guten Korrosionsschutz zu bekommen, tendiert man daher häufig dahin, die Beschichtungsmasse relativ dick aufzutragen. Dies ist gleichermaßen material-, arbeits- und kostenintensiv. Das Trocknen solcher lösemittelhaltigen Beschichtungsmassen beruht hierbei regelmäßig auf physikalischen und chemischen Trocknungs- bzw. Aushärtungsprozessen. Die Trocknungsprozesse haben in einer Weise vonstatten zu gehen, dass die erhaltenen Beschichtungen weder zu weich noch zu hart geraten. In letzterem Fall erhält man spröde Lackbeschichtungen, die sehr leicht abblättern. Zwecks Initiierung und Forcierung der chemischen, oxidativen Trocknung vermittels Luftsauerstoff setzt man häufig organische Kobaltsalze als sogenannte Primärtrockner zu. Angesichts immer strenger werdender gesetzlicher Vorgaben stellt sich die Frage, ob derartige Kobalt-basierte Trockner zukünftig in lösemittelhaltigen Beschichtungsmassen noch verwendet werden können. Allerdings werden bei Verwendung alternativer Primärtrockner zumeist weniger zufriedenstellende Resultate erzielt.

Die EP 2784 130 A1 betrifft einen Härtungsbeschleuniger für ein ungesättigtes Harz vom oxidativen Polymerisationstyp, umfassend ein Fettsäuremangansalz (A), einen Aminoalkohol (B) der folgenden allgemeinen Formel (1) R¹R²N-X¹-Y-X²-OH, wobei R1 und R2 jeweils unabhängig voneinander ein Wasserstoffatom oder eine Alkylgruppe mit 1 bis 6 Kohlenstoffatomen, X1 und X2 jeweils unabhängig voneinander eine Alkylengruppe mit 2 bis 6 Kohlenstoffatomen und Y ein Sauerstoffatom oder -NR3-, worin R3 ein Wasserstoffatom oder eine Alkylgruppe mit 1 bis 6 Kohlenstoffatomen ist, darstellen, und mindestens ein Fettsäuremetallsalz (C) ausgewählt aus der Gruppe bestehend aus einem Fettsäure-Wismutsalz, einem Fettsäure-Zirkoniumsalz, einem Fettsäure-Bariumsalz und einem Fettsäure-Eisensalz. Durch Verwendung dieses Härtungsbeschleunigers soll sich die Menge an Kobaltmetallseifen bei der Härtung ungesättigter Harze verringern lassen.

Es wäre daher wünschenswert, auf lösemittelhaltige Beschichtungsmassen zurückgreifen zu können, die nicht mehr mit den Nachteilen des Stands der Technik behaftet sind.

Der vorliegenden Erfindung lag daher die Aufgabe zugrunde, lösemittelhaltige Beschichtungsmassen zu entwickeln, die auf vielfältigen Substratunterlagen leicht appliziert werden können, die für Außenanwendungen geeignet sind und die sich zudem durch eine gute Haftung auszeichnen. Darüber hinaus lag der vorliegenden Erfindung die Aufgabe zugrunde, solche lösemittelhaltigen Beschichtungsmassen verfügbar zu machen, die metallische Substrate mit einem guten, dauerhaften Korrosionsschutz ausstatten. Auch lag der Erfindung die Aufgabe zugrunde, lösemittelhaltige Beschichtungsmassen zur Verfügung zu stellen, die insbesondere auch bei relativ großen Schichtdicken gleichmäßig und zügig abtrocknen. Demgemäß wurde eine lösemittelhaltige Beschichtungsmasse gefunden, enthaltend oder bestehend aus
a) mindestens einem oxidativ trocknenden organischen Bindemittel,
b1) mindestens einem ersten Primärtrockner basierend auf Eisen, insbesondere umfassend oder bestehend aus mindestens einer Komplexverbindung des Eisens, insbesondere einem Komplexsalz des Eisens,
b2) mindestens einem zweiten Primärtrockner basierend auf Mangan, insbesondere umfassend oder bestehend aus einer Komplexverbindung des Mangans, insbesondere einem Komplexsalz des Mangans,
c1) mindestens einem ersten Sekundärtrockner umfassend oder bestehend aus mindestens einem organischen Salz des Zirkoniums und/oder Strontiums,
d1) mindestens einem ersten Hautverhinderungsmittel und
d2) mindestens ein zweites Hautverhinderungsmittel, wobei das zweite Hautverhinderungsmittel bei 20°C über einen höheren Dampfdruck verfügt als das erste Hautverhinderungsmittel,
e) gegebenenfalls mindestens einem Additiv sowie
   ferner umfassend Liganden, die Eisen- und/oder Manganspezies komplexieren können, die ausgewählt sind aus mindestens einem mono-, di-, tri-, tetra-, penta- und/oder hexadentaten Stickstoffdonorliganden.

Es hat sich überraschend gezeigt, dass bei kombinierter Verwendung eines ersten Primärtrockners umfassend oder bestehend aus mindestens einem organischen Salz des Eisens und/oder einer Komplexverbindung des Eisens, vorzugsweise einer Komplexverbindung des Eisens, und eines zweiten Primärtrockners umfassend oder bestehend aus mindestens einem organischen Salz des Mangans und/oder einer Komplexverbindung des Mangans, vorzugsweise einer Komplexverbindung des Mangans, eine verbesserte Trocknungsleistung erzielt wird. Diese ist sogar regelmäßig besser als die Trocknungsleistung, die mit herkömmlichen Primärtrocknem in Form organischer Kobaltsalze erzielt wird, und zwar selbst bei niedrigeren Temperaturen, beispielsweise bei etwa 3°C. Hier hat sich als überraschend erwiesen, dass sich mit den erfmdungsgemäßen Beschichtungsmassen die überragenden Trocknungseigenschaften einstellen, obwohl die Gesamtmenge an Eisen- und Mangan basierten Primärtrocknem um ein mehrfaches geringer sein kann als die in herkömmlichen Beschichtungsmassen verwendete Menge an Kobalt-basierten Primärtrocknern, beispielsweise um das 5- oder das 10-fache geringer.

Geeignete Komplexverbindungen des Eisens und/oder Mangans, insbesondere Komplexsalze, basieren z.B. auf 3,7-Diaza-bicyclo[3,3.1]nonan-Liganden. Exemplarisch sei als besonders geeignet Eisen(2+)-chloro(dimethyl-9,9-dihydroxy-3-methyl-2,4-di-(2-pyridyl)-7-(pyridin-2-ylmethyl)-3,7-diazabicyclo[3.3.1]nonan-1,5-dicarboxylat)-chlorid genannt. Dessen Herstellung findet sich z.B. in der WO 2011095308 A1 offenbart.

Geeignete organische Salze des Eisens und geeignete organische Salze des Mangans umfassen auch Metallseifen des Eisens bzw. des Mangans. Hierbei stellen bevorzugte Metallseifen Salze auf der Basis von kationischen Eisen- bzw. Manganspezies und Fettsäuren, insbesondere synthetischen Fettsäuren, dar. Exemplarisch seien unter den geeigneten Fettsäuren Hydroxystearate, Behenate, Arachinate, Palmitate und Laurate genannt.

Des Weiteren hat es sich als vorteilhaft herausgestellt, der erfindungsgemäßen Beschichtungsmasse zusätzlich solche Komplexliganden zuzusetzen, die mit der Eisenspezies der organischen Eisensalze und/oder mit den Eisenspezies der Eisen-Komplexverbindungen, insbesondere der Eisenspezies der Eisen-Komplexverbindungen, gemäß dem ersten Primärtrockner eine koordinative Bindung eingehen können (Komponente g)). Entsprechend kann vorgesehen sein, der erfindungsgemäßen Beschichtungsmasse zusätzlich solche Komplexliganden zuzusetzen, die mit der Manganspezies der organischen Mangansalze und/oder mit den Manganspezies der Mangan-Komplexverbindungen, insbesondere der Manganspezies der Mangan-Komplexverbindungen, gemäß dem zweiten Primärtrockner eine koordinative Bindung eingehen können (Komponente h)). Durch die Zugabe der genannten Komplexliganden kann die Trocknungsstabilität der erfindungsgemäßen Beschichtungsmassen nochmals verbessert werden. Besonders geeignet sind hierbei solche Eisen- oder Mangan-Komplexliganden, d.h. Liganden, die Eisen- und/oder Manganspezies komplexieren können, die ausgewählt sind aus mindestens einem mono-, di-, tri-, tetra-, penta- und/oder hexadentaten Stickstoffdonorliganden. Hierbei kann es sich z.B. um stickstoffhaltige Lewis-Basen handeln. Solche geeigneten Komplexliganden sind z.B. der WO 2012/079624 A1 zu entnehmen.

Besonders bevorzugt sind dabei solche erfindungsgemäßen Beschichtungsmassen, die im Wesentlichen frei von Primärtrocknern und Sekundärtrocknem auf Kobalt-, Barium- und/oder Bleibasis sind. Als im Wesentlichen frei von Primärtrocknem auf Kobaltbasis soll im Sinne der Erfindung im Einklang mit der Norm EN 71, Teil 3, eine solche Beschichtungsmasse verstanden werden, die nicht mehr als 2,6 ppm (mg/kg) an Kobalt enthält. Als im Wesentlichen frei von Sekundärtrocknem auf Blei-Basis soll im Sinne der Erfindung im Einklang mit der Norm EN 71, Teil 3, eine solche Beschichtungsmasse verstanden werden, die nicht mehr als 3,4 ppm (mg/kg) an Blei enthält. Besonders bevorzugt sind dabei solche erfindungsgemäßen Beschichtungsmassen, die vollständig frei von Primärtrocknem auf Kobaltbasis und/oder von Sekundärtrocknem auf Blei-Basis sind, wobei solche Beschichtungsmassen hervorzuheben sind, die sowohl vollständig frei von Primartrocknern auf Kobaltbasis wie auch vollständig frei von Sekundärtrocknem auf Blei-Basis sind. Vollständig frei soll bedeuten, dass die Mengen an Kobalt und Blei derart gering sind, dass sie unterhalb der Nachweisgrenze gegenwärtig gängiger Analysetechniken liegen.

Besonders geeignete erfindungsgemäße Beschichtungsmassen umfassen ferner c2) mindestens einen zweiten Sekundärtrockner umfassend oder bestehend aus mindestens einem organischen Salz des Calciums, Zinks und einer beliebigen Mischung hiervon. Besonders zufriedenstellende Resultate stellen sich regelmäßig bei Verwendung eines organischen Salzes des Calciums als zweitem Sekundärtrockner neben einem organischen Salz des Zirkoniums oder einem organischen Salz des Strontiums als erstem Sekundärtrockner ein.

Dabei kann in einer besonders geeigneten Ausgestaltung vorgesehen sein, dass das organische Salz des ersten und/oder zweiten Sekundärtrockners Neodecanoate, Oleate, Stearate, Palmitate und/oder Naphthenate, insbesondere Neodecanoate, umfasst, besonders bevorzugt Zirkonium- und/oder Strontiumneodecanoate.

Erfindungsgemäße Beschichtungsmassen zeichnen sich auch dadurch aus, dass sie ferner d2) mindestens ein zweites Hautverhinderungsmittel enthalten, wobei das zweite Hautverhinderungsmittel bei 20°C über einen höheren Dampfdruck verfügt als das erste Hautverhinderungsmittel.

Es hat sich als besonders zweckmäßig erwiesen, neben dem ersten Hautverhinderungsmittel ein weiteres, zweites Hautverhinderungsmittel einzusetzen, das bei Raumtemperatur flüchtiger ist als das erste Hautverhinderungsmittel. Bevorzugte erste Hautverhinderungsmittel können dabei ausgewählt werden aus der Gruppe bestehend aus substituierten Phenolen, Dialkylaminoethanol, insbesondere Dimethylaminoethanol und/oder Diethylaminoethanol, Dialkylhydroxylamin, insbesondere Dimethylhydroxylamin und/oder Diethylhydroxylamin, Dibenzylhydroxylamin, Hydroxylamin, Diethylamin, Triethylamin und beliebigen Mischungen hiervon. Hierbei sind insbesondere solche ersten Hautverhinderungsmittel bevorzugt, die über eine Verdunstungszahl (VD) nach DIN 53170 (bei 20°C und 65 ±5 % relativer Luftfeuchtigkeit mit Diethylether als Bezugsstoffs) größer 200, bevorzugt größer 500 und besonders bevorzugt größer 1000 verfügen.

Für das zweite Hautverhinderungsmittel greift man bevorzugt auf Ketoxime, insbesondere Acetonoxim, Butanonoxim, Pentanonoxim oder deren beliebige Mischungen zurück. Besonders geeignete zweite Hautverhinderungsmittel zeichnen sich durch eine Verdunstungszahl (VD) nach DIN 53170 (bei 20°C und 65±5 % relativer Luftfeuchtigkeit mit Diethylether als Bezugsstoffs) kleiner oder gleich 140, vorzugsweise kleiner oder gleich 75 und besonders bevorzugt kleiner oder gleich 40 aus. Es hat sich überraschend gezeigt, dass die erfindungsgemäßen Beschichtungsmassen auch ohne Methylethylketoxim (MEKO) als Hautverhinderungsmittel auskommen, und zwar ohne Einbußen bei der Güte der Hautverhinderung in Kauf nehmen zu müssen.

Die Hautverhinderungsmittel wirken üblicherweise als Reduktions- oder Komplexierungsmittel und verhindern die frühzeitige Aushärtung der Beschichtungsmasse an der Oberfläche. Der Einsatz eines zweiten Hautverhinderungsmittels, das flüchtiger ist als das erste Hautverhinderungsmittel und sich in Transport- oder Lagergebinden für die erfindungsgemäßen Beschichtungsmassen auch in der Atmosphäre oberhalb der Beschichtungsmasse befindet, trägt üblicherweise dazu bei, dass Beschichtungsfilme, die sich bei Bewegung oder Schrägstellung des Gebindes an dessen Innenwandung bilden, nicht aushärten. Insbesondere bei Mitverwendung des zweiten Hautverhinderungsmittels hat sich gezeigt, dass eine Stippenbildung unterdrückt werden kann. Derartigen Stippen gehen häufig auf am Innenrand eines Gebindes angetrocknete Beschichtungsbestandteile zurück, die nach dem Trocknen abbrechen und in die Beschichtungsmasse fallen.

Für das oxidativ trocknende organische Bindemittel greift man bevorzugt zurück auf solche Bindemittel, die ausgewählt sind aus der Gruppe bestehend aus mindestens einem oxidativ trocknenden mittelöligen und/oder langöligen Epoxyesterharz, insbesondere einem oxidativ trocknenden langöligen Epoxyesterharz, mindestens einem oxidativ trocknenden mittelöligen und/oder langöligen Alkydharz, insbesondere einem oxidativ trocknenden langöligen Alkydharz, mindestens einem oxidativ trocknenden modifizierten, insbesondere Isocyanat-modifizierten, mittelöligen und/oder langöligen Alkydharz, insbesondere einem oxidativ trocknenden modifizierten langöligen Alkydharz, und einer beliebigen Mischung hiervon. In einer besonders zweckmäßigen Ausgestaltung wird auf die oxidativ trocknenden langöligen Epoxyesterharze zurückgegriffen. Unter einem langöligem Epoxyesterharz bzw. einem langöligen Alkydharz sollen im Sinne der vorliegenden Erfindung solche langöligen Systeme verstanden werden, die einen Ölgehalt bzw. eine Öllänge oberhalb von 60 % aufweisen. Unter einem kurzöligen Epoxyesterharz bzw. einem kurzöligen Alkydharz soll demgegenüber eine solche kurzölige Verbindung verstanden werden, die über einen Ölgehalt bzw. eine Öllänge verfügt, die üblicherweise im Bereich von 20 bis 40 % liegt. Für mittelölige Epoxyesterharze bzw. mittelölige Alkydharze liegt der Ölgehalt bzw. die Öllänge regelmäßig im Bereich von 40 bis 60 %. Unter dem Ölgehalt bzw. der Öllänge soll hierbei in Bezug auf das Gesamtgewicht des Epoxyesterharzes bzw. des Alkdyharzes der gewichtsprozentige Anteil derjenigen Fettsäuren, einschließlich Polyolrest verstanden werden, die mit den Hydroxygruppen der Polyoleinheiten im Epoxyesterharz bzw. im Alkydharz verbunden vorliegen. Im Sinne der vorliegenden Erfindung werden dadurch die Begriffe "Ölgehalt" und "Öllänge" synonym verwandt.

Die langöligen Epoxyesterharze bzw. die langöligen Alkydharze werden häufig gelöst in Kohlenwasserstoffen, insbesondere in entaromatisierten Kohlenwasserstoffen, in den erfindungsgemäßen Beschichtungsmassen eingesetzt. Für viele Anwendungen hat es sich als vorteilhaft erwiesen, auf eine Bindemittelmischung aus langöligen Epoxyesterharzen und langöligen Alkydharzen, insbesondere Isozyanat-modifizierten langöligen Alkydharzen zurückzugreifen, wobei die langöligen Epoxyesterharze vorzugsweise über einen größeren Gewichtsanteil verfügen als die, insbesondere modifizierten, Alkydharze. Beispielsweise können die Epoxyesterharze in Bezug auf die Alkydharze in mindestens vierfacher, vorzugsweise mindestens fünffacher und besonders bevorzugt mindestens sechsfacher Menge in den erfindungsgemäßen Beschichtungsmassen vorliegen. Das für die erfindungsgemäßen Beschichtungsmassen verwendete Bindemittel stellt bevorzugt auch eine solche Bindemittelmischung dar, umfassend langölige Epoxyesterharze, langölige Alkydharze, insbesondere Isocyanat-modifizierte langölige Alkydharze, sowie Haftharze.

Außerdem können in einer weiteren bevorzugten Ausführungsform der erfindungsgemäßen Beschichtungsmasse diese ferner mindestens einen Acrylharz (Komponente i)), insbesondere mit einer Glasübergangstemperatur größer 75°C, und/oder mindestens einen modifizierten Acrylharz, insbesondere mit einer Glasübergangstemperatur größer 75°C, und/oder mindestens einen gesättigten Polyesterharz und/oder mindestens einen ungesättigten Polyesterharz umfassen.

Des Weiteren kann im Zusammenhang mit dem Langölanteil der langöligen Epoxyesterharze und der oxidativ trocknenden langöligen Alkydharze vorgesehen sein, dass diese auf Linolsäure, Linolensäure und/oder Ölsäure basieren Ferner kann in einer exemplarischen Ausgestaltung vorgesehen sein, dass der Mittelölanteil der mittelöligen Epoxyesterharze und/oder oxidativ trocknenden mittelöligen Alkydharze auf Linolsäure, Linolensäure und/oder Ölsäure basiert

Durch Mitverwendung mindestens eines Acrylharzes oder mindestens eines modifizierten Acrylharzes kann die Härte der mit den erfindungsgemäßen Beschichtungsmassen erhaltenen Beschichtungen besonders wirksam eingestellt werden. Auch trägt die Verwendung der gesättigten und/oder ungesättigten Polyesterharze als sogenannte Haftharze, insbesondere der gesättigten Polyesterharze häufig zu einer besseren Haftung der Beschichtung auf einer Substratoberfläche, insbesondere Metallsubstratoberfläche, bei.

Üblicherweise verfügen die erfindungsgemäßen Beschichtungsmassen ferner über mindestens einen Füllstoff (Komponente j)), insbesondere ausgewählt aus der Gruppe bestehend aus Calciumcarbonat, z.B. gefälltes Calciumcarbonat (auch synthetisches Calciumcarbonat genannt) und/oder natürliches Calciumcarbonat, insbesondere natürliches Calciumcarbonat, Dolomit, Silikaten, insbesondere Schichtsilikaten ausgewählt aus der Gruppe bestehend aus Talkum, insbesondere plättchenförmigem Talkum, Glimmer, vorzugsweise mikronisiertem Glimmer, Feldspat, Pyrophyllit, Serpentin, Kaolinit und deren Mischungen, Bariumsulfat, z.B. synthetisches Bariumsulfat und/oder natürliches Bariumsulfat, insbesondere synthetisches Bariumsulfat, und einer beliebigen Mischung hiervon. Besonders bevorzugte Füllstoffe umfassen Dolomit, Talkum, synthetisches Bariumsulfat, mikronisierten Glimmer sowie beliebige Mischungen der vorangehend genannten Füllstoffe. Dolomit ist im Allgemeinen in einer Menge im Bereich von 1 bis 30 Gew. % und bevorzugt im Bereich von 2 bis 22 Gew. %, jeweils bezogen auf das Gesamtgewicht der Beschichtungsmasse, zugegen. Die Ölzahl der bevorzugten Dolomitspezifikation liegt üblicherweise im Bereich von 10 bis 25 und bevorzugt im Bereich von 12 bis 20. Talkum kann beispielsweise in einer Menge bis zu 20 Gew. % und vorzugsweise in einer Menge bis zu 16 Gew. %, jeweils bezogen auf das Gesamtgewicht der erfindungsgemäßen Beschichtungsmasse, in derselben vorliegen. Synthetisches Bariumsulfat kann in Mengen von 0 bis 15 Gew. % und vorzugsweise im Bereich von 1 bis 12 Gew. % den erfindungsgemäßen Beschichtungsmassen zugegeben werden, jeweils bezogen auf das Gesamtgewicht der Beschichtungsmasse. Die Ölzahl von bevorzugtem synthetischen Bariumsulfat liegt üblicherweise im Bereich von 10 bis 20 und vorzugsweise im Bereich von 12 bis 17. Mikronisierter Glimmer kann in den erfindungsgemäßen Beschichtungsmassen in Mengen von 0 bis 10 Gew. % und bevorzugt in Mengen im Bereich von 1 bis 7 Gew. %, jeweils bezogen auf das Gesamtgewicht der Beschichtungsmasse, zugesetzt werden. In bevorzugten Ausgestaltungen verfügt der mikronisierte Glimmer über eine Ölzahl im Bereich von 30 bis 60, vorzugsweise im Bereich von 40 bis 55.

Zwecks geeigneter Farbeinstellung sind die erfindungsgemäßen Beschichtungsmassen in der Regel alternativ oder zusätzlich auch mit mindestens einen Farbmittel (Komponente k)) versetzt. Unter den Farbmitteln greift man bevorzugt auf Pigmente zurück. Unter den Weißpigmenten ist Titandioxid bevorzugt. Als geeignete Pigmente kommen beispielsweise ebenfalls Aluminium-Pigmente, und/oder Aluminiumflakes, in Betracht. Pigmente werden häufig in Mengen von 1 bis 30 Gew. % und vorzugsweise im Bereich von 2 bis 20 Gew. %, jeweils bezogen auf das Gesamtgewicht der Beschichtungsmasse, eingesetzt. Aluminium-pigmente oder Aluminiumflakes können zum Beispiel in Mengen im Bereich vom 0 bis 20 Gew.-%, bevorzugt im Bereich 1 bis 15 Gew.-%, jeweils bezogen auf das Gesamtgewicht der Beschichtungsmasse, eingesetzt werden. Vorzugsweise verfügen die Pigmente über eine Ölzahl im Bereich von 10 bis 30, vorzugsweise im Bereich von 15 bis 25.

Die Ölzahl im Sinne der vorliegenden Erfindung kann gemäß ISO 787, Teil 5, ermittelt werden. Hierbei wird regelmäßig der Bedarf an Leinöl bestimmt, der zur vollständigen Benetzung des Pigments bzw. Füllstoffes erforderlich ist.

In einer weiteren bevorzugten Ausführungsform verfügen die erfindungsgemäßen Beschichtungsmasse ferner über mindestens ein Korrosionsschutzpigment, insbesondere Calciumaluminiumphosphatsilikathydrat, Eisenglimmer und/oder Zinkoxid (Komponente l)), wobei Calciumaluminiumphosphatsilikathydrat und Zinkoxid besonders bevorzugt sind.

Geeignete Korrosionsschutzpigmente umfassen z.B. dem Fachmann geläufige Phosphatpigmente wie Calciumaluminiumphosphatsilikathydrat. Diese Korrosionsschutzpigmente werden regelmäßig in einer Menge im Bereich von 1 bis 15 Gew. %, vorzugsweise im Bereich von 2 bis 12 Gew. %, jeweils bezogen auf das Gesamtgewicht der Beschichtungsmasse eingesetzt. Der mittlere Teilchendurchmesser geeigneter Korrosionsschutzpigmente liegt vorzugsweise im Bereich von 1,5 µm bis 6 µm und vorzugsweise im Bereich von 2,0 µm bis 5,0 µm. Wird Zinkoxid als Korrosionsschutzpigment verwendet, setzt man dieses häufig in einer Menge im Bereich von 0,5 bis 5,0 Gew. %, vorzugsweise im Bereich von 1,0 bis 3,5 Gew. % ein.

Als weiteres geeignetes Korrosionsschutzpigment kann auch auf Eisenglimmer, beispielsweise in einer Menge im Bereich von 1 bis 10 Gew. %, vorzugsweise im Bereich von 1,5 bis 5 Gew. %, zurückgegriffen werden.

Mit den erfindungsgemäßen Beschichtungsmassen sind im Allgemeinen solche Beschichtungen zugänglich, die einer Einordnung in die Korrosionsschutzklasse "C3 high" wie auch in die Korrosionsschutzklasse "C4 high", ermittelt nach DIN ISO EN 12944-6 (Juli 1998) (Bewertung von Beschichtungssystemen) ermöglichen. Von Vorteil ist auch, dass sich mit den erfindungsgemäßen Beschichtungsmassen selbst verzinkte Substrate wirksam gegen Korrosion schützen lassen. Dies gelingt mit solchen erfindungsgemäßen Beschichtungsmassen besonders gut, die auf den Zusatz von langöligen Alkydharzen als Co-Bindemittel nahezu vollständig oder vollständig verzichten. Für die Bestimmung der Haftfestigkeit einer Beschichtung kann der Korrosionsschutztest gemäß DIN EN ISO 16276-2 (August 2007) eingesetzt werden. Sofern und soweit erforderlich kann bei Korrosionsschutzprüfung auch Gebrauch gemacht werden von der Norm DIN EN ISO 12944-Teil 4 (Arten von Oberflächen und Oberflächenvorbereitung) (Juli 1998) und sowie von der Norm DIN EN ISO 12944-Teil 5 (Beschichtungssysteme) (September 2007).

Als Lösemittel für die erfindungsgemäße lösemittelhaltige Beschichtungsmasse wird bevorzugt mindestens ein, insbesondere im Wesentlichen aromatenfreier, aliphatischer Kohlenwasserstoff eingesetzt, vorzugsweise ausgewählt aus der Gruppe bestehend aus, insbesondere entaromatisiertem, Testbenzin, n-Paraffinen, Isoparaffinen, Cycloparaffinen und beliebigen Mischungen hiervon. Gegebenenfalls kann auch Methoxypropoxypropanol als Co-Lösemittel zugegeben werden. Besonders bevorzugt kommen entaromatisierte aliphatische Kohlenwasserstoffe zum Einsatz. Das Lösemittel liegt in der erfindungsgemäßen Beschichtungsmasse üblicherweise in einer Menge im Bereich von 10 bis 40 Gew. %, vorzugsweise im Bereich von 15 bis 45 Gew. % vor. Häufig wird insbesondere zur Verbesserung der Verdünnungseigenschaften und zwecks Erhalts einer guten Verarbeitungsviskosität Methoxypropoxypropanol als Co-Lösemittel zugesetzt, beispielsweise in einer Menge im Bereich von 0,5 bis 8 Gew. %, vorzugsweise im Bereich von 1 bis 5 Gew. %.

Als aromatenfrei im Sinne der vorliegenden Erfindung sollen solche Lösemittel bzw. Kohlenwasserstoffe verstanden werden, die gemäß der Definition TRGS 900 zur TRGS 900 Gruppe 1 gehören. Gemäß der VdL-Richtlinie Bautenanstrichstoffe (Richtlinie zur Deklaration von Inhaltsstoffen in Bautenlacken, Bautenfarben und verwandten Produkten) VdL-RL 01 (4. Revision) des Verbands der deutschen Lack- und Druckfarbenindustrie e.V. (revidierte Ausgabe November 2013) sollen insbesondere auch solche Lösemittel bzw. aliphatischen Kohlenwasserstoffe aromatenfrei im Sinne der vorliegenden Erfindung verstanden werden, die zu Beschichtungen aus den erfindungsgemäßen Beschichtungsmassen führen, welche einen Aromatengehalt kleiner 1 Gew.-%, bestimmt nach DIN 55683, aufweisen (s.a. 4.2.2. der VdL-RL 01). Ganz bevorzugt sollen im Sinne der vorliegenden Erfindung unter aromatenfrei solche Lösemittel bzw. aliphatischen Kohlenwasserstoffe verstanden werden, die einen Aromatengehalt kleiner 0, 2 Gew.-%, vorzugsweise kleiner 0,1 Gew.-%, besitzen.

In einer zweckmäßigen Ausgestaltung der erfindungsgemäßen Beschichtungsmassen sind die Additive ausgewählt aus der Gruppe bestehend aus Verdickem, Entschäumern, Mattierungsmitteln, insbesondere Fällungskieselsäure, Lichtschutzmitteln, Radikalfängern, Netzmitteln, Dispergiermitteln, Oberflächenadditiven, insbesondere Silikonoberflächenadditiven, beispielsweise polyethermodifiziertes Polymethylalkylsiloxan und/oder Silikonpolyether-Copolymere, Wachse und/oder oberflächenaktive Polyacrylate, und beliebigen Mischungen dieser Verbindungen.

Als geeignete Rheologiemodifizierungsmittel (Komponente f)) kann man z.B. zurückgreifen auf Schichtsilikate ausgewählt aus der Gruppe bestehend aus Bentoniten, modifizierte Schichtsilikate, insbesondere organisch modifizierte Schichtsilikate, thioxotrope Alkydharze und beliebige Mischungen hiervon.

Modifizierte sowie insbesondere organisch modifizierte Schichtsilikate können beispielsweise durch Vermischen von quartären Ammoniumsalzen mit einem Ton, beispielsweise Smektiten, Montmorilloniten, Bentoniten und/oder Sepioliten erhalten werden. Hierbei entstehen regelmäßig sogenannte exfolierte Schichtsilikatsysteme. Die quartären Ammoniumsalze verfügen im Allgemeinen über mindestens einen, vorzugsweise mindestens zwei oder genau zwei langkettige gesättigte oder Doppelbindungen enthaltende Kohlenwasserstoffreste, beispielsweise eine lineare oder verzweigte, insbesondere lineare, Alkyl- oder Alkylenkette. Exemplarisch seien langkettige Kohlenwasserstoffreste auf Basis natürlicher Fettsäuren wie Ölsäure, Linolsäure, Palmitinsäure, Stearinsäure und/oder Myristinsäure genannt. Beispielsweise seien als geeignete modifizierte Schichtsilikate Quatemium-90 Sepiolite und Quaternium-90 Montmorillonite genannt.

Beispielsweise können auch beliebige Mischungen an solchen langkettigen Kohlenwasserstoffresten eingesetzt werden, beispielsweise auf Basis des Palmöls oder Talgs. Bevorzugt wird auf solche modifizierten Schichtsilikate auf Basis von Sepioliten und Montmorilloniten zurückgegriffen. Für die Herstellung geeigneter modifizierter Schichtsilikate sei exemplarisch auf die WO 97/30950 verwiesen.

Als geeignete Lichtschutzmittel kann man sogenannte HALS-Verbindungen (*hindered amine light stabilizers*) verwenden. Diese Verbindungen ermöglichen häufig eine sehr gute Wetterstabilität, und nicht selten geht mit diesen auch eine reduzierte Kreidungsneigung einher. Lichtschutzmittel können z.B. in einer Menge im Bereich von 0,1 bis 2,0 Gew. %, vorzugsweise im Bereich von 0,2 bis 0,75 Gew. %, jeweils bezogen auf das Gesamtgewicht der Beschichtungsmasse eingesetzt werden.

Netz- und/oder Dispergiermittel können den erfindungsgemäßen Beschichtungsmassen zugesetzt werden, um die Pigmente und/oder Füllstoffe zu stabilisieren und um beispielsweise ein Sedimentieren von Pigmenten und Füllstoffen zu verhindern. Netz- und/oder Dispergiermittel tragen regelmäßig dazu bei, dass die Pigmente und/oder Füllstoffe nicht verklumpen. Über den Zusatz an Netz- und/oder Dispergiermitteln kann man zu einer verbesserten Lagerstabilität gelangen. Auch kann die Dispergierbarkeit verbessert werden, indem man mit Hilfe von Netz- und/oder Dispergiermitteln die Pigmente stabilisiert bzw. eine Agglomeratbildung verhindert. Des Weiteren können die Netz- und/oder Dispergiermittel ein verbessertes Deckvermögen sicherstellen. Geeignete Netzmittel umfassen beispielsweise die Salze ungesättigter Polyamide und/oder die Salze von sauren Polyestern, insbesondere von niedermolekularen sauren Polyestern.

Als Entschäumer können beispielsweise Polysiloxane eingesetzt werden. Geeignete schaumzerstörende bzw. schaumunterbindende Polysiloxane sind dem Fachmann bekannt.

Als Mattierungsmittel greift man häufig auf Kieselsäure, z.B. Fällungskieselsäure, insbesondere nachbehandelte Fällungskieselsäure, zurück. Diese Fällungskieselsäure wird dabei regelmäßig mit einer Teilchengröße D₅₀, bestimmt nach ISO 13320, im Bereich von 1 µm bis 25 µm, bevorzugt im Bereich von 2 µm bis 20 µm und besonders bevorzugt im Bereich von 3 µm bis 18 µm, eingesetzt. Interessanterweise wurde gefunden, dass durch die Zugabe von Mattierungsmitteln das Trocknungsverhalten der erfindungsgemäßen Beschichtungsmassen nicht nachteilig beeinflussen.

Unter thixotrope Alkydharze sollen im Sinne der vorliegenden Erfindung solche Alkydharze verstanden werden, die aus einer partiellen Umsetzung von Polyamiden aus polymeren Fettsäuren und Polyaminen mit Alkylharzen herrühren. Ferner können auch Polyharnstoffmodifizierte Alkydharze, auch Polyhamstoff-thixotropierte Alkydharze genannt, als thixotrope Alkydharze im Sinne der Erfindung eingesetzt werden. Exemplarisch sei auf geeignete thixotrope Alkydharze verwiesen, wie sie in der EP 922 738 B1 beschrieben sind.

Ganz besonders bevorzugt lösen solche erfindungsgemäßen Beschichtungsmassen die der Erfindung zu Grunde liegenden Aufgaben, bei denen der Anteil an dem ersten Primärtrockner umfassend oder bestehend aus dem mindestens einen organischen Salz des Eisen und/oder einer Komplexverbindung des Eisens, in Bezug auf dessen Metallanteil, im Bereich von 0,0001 bis 0,1 Gewichtsprozent, bevorzugt im Bereich von 0,0005 bis 0,05 Gewichtsprozent und besonders bevorzugt im Bereich von 0,001 bis 0,01 Gewichtsprozent liegt, jeweils bezogen auf das Gesamtgewicht an oxidativ trocknendem organischen Bindemittel, und/oder bei dem der Anteil an dem zweiten Primärtrockner umfassend oder bestehend aus dem mindestens einen organischen Salz des Mangans und/oder einer Komplexverbindung des Mangans, in Bezug auf dessen Metallanteil, im Bereich von 0,0001 bis 1,0 Gewichtsprozent, bevorzugt im Bereich von 0,0005 bis 0,5 Gewichtsprozent und besonders bevorzugt im Bereich von 0,001 bis 0,05 Gewichtsprozent liegt, jeweils bezogen auf das Gesamtgewicht an oxidativ trocknendem organischen Bindemittel, und/oder bei dem der Anteil an dem mindestens einen ersten Sekundärtrockner umfassend oder bestehend aus mindestens einem organischen Salz des Zirkoniums und/oder Strontiums, in Bezug auf dessen Metallanteil, im Bereich von 0,01 bis 3,0 Gewichtsprozent, bevorzugt im Bereich von 0,05 bis 2,0 Gewichtsprozent und besonders bevorzugt im Bereich von 0,1 bis 1,5 Gewichtsprozent liegt, jeweils bezogen auf das Gesamtgewicht an oxidativ trocknendem organischen Bindemittel, und/oder bei dem der Anteil an dem mindestens einen zweiten Sekundärtrockner umfassend oder bestehend aus mindestens einem organischen Salz des Calciums, Bariums, Lithiums und einer beliebigen Mischung, in Bezug auf dessen Metallanteil, hiervon im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht an oxidativ trocknendem organischen Bindemittel, und/oder bei dem der Anteil an dem mindestens einen ersten Hautverhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht der Beschichtungsmasse, und/oder bei dem der Anteil an dem mindestens einen zweiten Hautverhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht der Beschichtungsmasse, und/oder bei dem der Anteil an Lösemittel im Bereich von 10 bis 50 Gewichtsprozent, bevorzugt 10 bis 40 Gewichtsprozent und besonders bevorzugt 15 bis 35 Gewichtsprozent liegt, jeweils bezogen auf das Gesamtgewicht der Beschichtungsmasse, wobei die Anteile der die Beschichtungsmasse bildenden Komponenten jeweils stets 100 Gewichtsprozent ergeben.

Die der Erfindung zu Grunde liegenden Aufgabe wird des Weiteren gelöst durch ein Beschichtungssystem enthaltend oder gebildet aus mindestens einer erfindungsgemäßen Beschichtungsmasse und mindestens einer lösemittelhaltigen Farbtonpaste.

Ferner wird die der Erfindung zu Grunde liegenden Aufgabe gelöst durch eine Beschichtung auf einem Substrat, erhalten oder erhältlich durch Auftragen und physikalisches und chemisches Trocknen der erfindungsgemäßen Beschichtungsmasse oder des erfindungsgemäßen Beschi chtungssystems.

Die erfindungsgemäße Beschichtung verfugt zweckmäßigerweise über eine durchschnittliche Trockenschichtdicke, insbesondere absolute Schichtdicke, im Bereich von 10 bis 150 µm, bevorzugt im Bereich von 20 bis 120 µm und besonders bevorzugt im Bereich von 30 bis 90 µm verfügt. Unter der durchschnittlichen Trockenschichtdicke soll diejenige Dicke einer Beschichtung verstanden werden, die bei einmaligem Auftrag der erfindungsgemäßen Beschichtungsmasse erhalten wird. Die durchschnittliche Trockenschichtdicke der erfindungsgemäßen Beschichtungen kann gemäß der Norm DIN EN ISO 2808-2 (Mai 2007) bestimmt werden.

Derartige erfindungsgemäßen Beschichtungen haben sich als besonders günstig erwiesen, bei denen die Pigment-Volumen-Konzentration im Bereich von 15 bis 60 %, vorzugsweise im Bereich von 20 bis 50 % und besonders bevorzugt im Bereich von 30 bis 45 % liegt.

Die der Erfindung zugrundeliegenden Aufgabe wird des Weiteren gelöst durch einen Kit-of-parts für ein erfindungsgemäßes Beschichtungssystem umfassend mindestens eine erfindungsgemäße Beschichtungsmasse und mindestens eine lösemittelhaltige Farbtonpaste.

Die erfindungsgemäßen Beschichtungsmassen eignen sich vor allem als Bauten-, Korrosionsschutz-, Industrie-, Maler- oder Maschinenlacke. Besonders bevorzugt werden die erfindungsgemäßen Gegenstände eingesetzt als Bauten-, Korrosionsschutz - oder Malerlacke. Ferner können die erfindungsgemäßen Beschichtungssysteme sowie das erfindungsgemäße Kit-of-parts für die Herstellung der genannten Lacke eingesetzt werden.

Die erfindungsgemäße Beschichtungsmasse kann als sogenannte 1-Topf-Beschichtungsmasse eingesetzt werden. Sie kann dabei sowohl als Grundierung, als auch als Mittelschicht als auch als Schlussbeschichtung verwendet werden. Die anwendungsgemäße Vorbereitung des jeweiligen Substrates ist vor der eigentlichen Applikation erforderlich. Gegebenenfalls ist die Beschichtungsmasse vor der Applikation aufzurühren. Die erfindungsgemäßen Beschichtungsmassen eignen sich sowohl für die Auftragung auf metallischen Substraten, beispielsweise auf Eisen, Stahl, Zink, verzinktem Stahl, Aluminium oder Kupfer. Die erfindungsgemäße Beschichtungsmasse kann aber auch zur Beschichtung von Kunststoffoberflächen, beispielsweise Hart-PVC Oberflächen und auch von Holzbauteilen, insbesondere maßhaltige Holzbauteilen, im Innen- und Außenbereich eingesetzt werden. Mit der erfindungsgemäßen Beschichtungsmasse geht außerdem der Vorteil einher, dass diese in verschiedenen Grundversionen, beispielsweise transparent oder weiß zur Verfügung gestellt werden kann und abtönbar ist. Interessanterweise können selbst Glimmer-Farbtöne hierbei abgetönt werden.

Vom besonderen Vorteil ist auch, dass die erfindungsgemäßen Beschichtungsmassen vollständig ohne Primärtrockner auf Kobaltbasis auskommen, gleichwohl ein hervorragendes Trocknungsprofil zeigen. Mit den erfindungsgemäßen Beschichtungsmassen gelangt man zu sehr lagerstabilen Systemen, die auch nach längerer Lagerzeit nicht zu Gelbildung bzw. Gelierung neigen. Beispielsweise kann ohne weiteres eine einjährige Lagerzeit garantiert werden.

Auch hat sich ferner als vorteilhaft erwiesen, dass die aus den erfindungsgemäßen Beschichtungsmaßnahem erhaltenen Beschichtungen keine oder eine nur sehr geringe Vergilbungstendenz zeigen, und das, obwohl Primärtrockner auf der Basis organischer Mangansalze üblicherweise eine stärkere Vergilbungstendenz hervorrufen als entsprechende Primärtrockner auf Kobaltbasis. Auch ist von praktischer Relevanz, dass sich mit den erfindungsgemäßen Beschichtungsmassen Filmhärten einstellen lassen, wie sie sich üblicherweise bei Einsatz herkömmlicher Kobalt-basierter Primärtrockner einstellen. Von ganz besonderem Vorteil ist hierbei, dass die aus den erfindungsgemäßen Beschichtungsmassen erhaltenen Beschichtungen bei niedrigen Temperaturen, beispielsweise bei 3°C, wesentlich besser und zügiger trocknen als Beschichtungsmassen enthaltend Kobalt-basierte Primärtrockner. Hierdurch lassen sich Arbeitszyklen wesentlich verkürzen. Beispielsweise ist es möglich, die erfindungsgemäße Beschichtung bereits nach wesentlich kürzerer Zeit überzulackieren. Beispielsweise können die aus den erfindungsgemäßen Beschichtungsmassen erhaltenen Beschichtungen nicht wie sonst üblich erst nach 24 Stunden, sondern bereits nach etwa 16 Stunden oder sogar noch früher überlackiert werden. Auch hat sich gezeigt, dass die Beschichtung nicht komplett durchgetrocknet zu sein hat, um überlackiert werden zu können.

Auch hat sich gezeigt, dass mit den erfindungsgemäßen Beschichtungsmassen Beschichtungen erhalten werden, die einen hervorragenden Korrosionsschutz liefern, die sich einfach und anwenderfreundlich applizieren lassen und die eine ausgezeichnete Oberflächenqualität zeigen.

Darüber hinaus ist es mit den erfindungsgemäßen Beschichtungsmassen möglich, zu VOC-Werten unterhalb von 500 g/L, insbesondere unterhalb von 300 g/L zu gelangen. Für die Bestimmung des Gehalts an flüchtigen organischen Verbindungen (VOC-Gehalt) kann auf die Norm DIN EN ISO 11890-1 (September 2007) zurückgegriffen werden.

Die besondere Anwenderfreundlichkeit der erfindungsgemäßen Beschichtungsmassen ist u.a. auch dadurch begründet, dass sich diese Beschichtungsmassen sowohl manuell, beispielsweise mit Pinsel oder Rolle, wie auch maschinell, beispielswies mittels Airless-Spritzverfahren, applizieren lassen. Hierbei kann der Verbrauch, insbesondere in Abhängigkeit vom Farbton, auf Mengen im Bereich von 100 bis 180 ml/m² eingestellt werden.

Die vielseitige Einsetzbarkeit der erfindungsgemäßen Beschichtungsmassen wird auch dadurch dokumentiert, dass diese sich mit herkömmlichen lösemittelhaltigen Farbtonpasten ohne weiteres abtönen lassen.

Als weiteren Vorteil ermöglicht es die erfindungsgemäße Beschichtungsmasse, auch sehr dicke Beschichtungen herzustellen. Sie kann demgemäß in einer Ausführungsform als sogenannte Dickschichtbeschichtung ausgewiesen werden. Hierzu trägt unter anderem auch das Rheologiemodifizierungsmittel, insbesondere in Form organisch modifizierter Schichtsilikate bei.

Ein ausgeprägter Korrosionsschutz für metallische Substratoberfläche lässt sich mit den erfindungsgemäßen Beschichtungsmassen einerseits über die Dicke der Beschichtung einstellen, andererseits aber auch über die Korrosionsschutzpigmente und über blättchenförmige Füllstoffe wie Talkum und/oder Dolomit.

Mit den erfindungsgemäßen Beschichtungsmassen lassen sich beispielsweise Brücken, Metallfeiler oder Metallzäune anwendungsfreundlich und mit hoher Korrosionsschutzwirkung beschichten.

Überdies zeichnen sich die erfindungsgemäßen Beschichtungsmassen durch ein Rheologieprofil aus, dass bei vertikal applizierten Beschichtungen das Phänomen des Ablaufens (*"sagging"*) unterbindet. Mit den erfindungsgemäßen Beschichtungsmassen gelingt folglich eine anwenderfreundliche Applizierbarkeit bzw. Handhabung. Die daraus erhaltenen Beschichtungen zeichnen sich durch ein gutes Deckvermögen aus und verfügen überdies im frisch applizierten Zustand über einen guten Verlauf und ein ausgeprägtes Einebnungsverhalten bei gleichzeitig schneller Trocknung.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Lösemittelhaltige Beschichtungsmasse für Lackbeschichtungen, enthaltend oder bestehend aus
a) mindestens einem oxidativ trocknenden organischen Bindemittel,
bl) mindestens einem ersten Primärtrockner basierend auf Eisen, insbesondere umfassend oder bestehend aus mindestens einer Komplexverbindung des Eisens, insbesondere einem Komplexsalz des Eisens,
b2) mindestens einem zweiten Primärtrockner basierend auf Mangan, insbesondere umfassend oder bestehend aus einer Komplexverbindung des Mangas, insbesondere einem Komplexsalz des Mangans,
c1) mindestens einem ersten Sekundärtrockner umfassend oder bestehend aus mindestens einem organischen Salz des Zirkoniums und/oder Strontiums,
d1) mindestens einem ersten Hautverhinderungsmittel und
d2) mindestens ein zweites Hautverhinderungsmittel, wobei das zweite Hautverhinderungsmittel bei 20°C über einen höheren Dampfdruck verfügt als das erste Hautverhinderungsmittel,
e) gegebenenfalls mindestens einem Additiv,
ferner umfassend Liganden, die Eisen- und/oder Manganspezies komplexieren können, die ausgewählt sind aus mindestens einem mono-, di-, tri-, tetra-, penta- und/oder hexadentaten Stickstoffdonorliganden.

2. Beschichtungsmasse nach Anspruch 1, ferner umfassend
c2) mindestens einen zweiten Sekundärtrockner umfassend oder bestehend aus mindestens einem organischen Salz des Calciums, Zinks und einer beliebigen Mischung hiervon

3. Beschichtungsmasse nach Anspruch 1 oder 2, ferner umfassend
f) mindestens ein Rheologiemodifizierungsmittel und/oder
g) mindestens einen Eisen-Komplexliganden und/oder
h) mindestens einen Mangan-Komplexliganden.

4. Beschichtungsmasse nach einem der vorangehenden Ansprüche, **dadurch gekennzeichnet, dass**
das oxidativ trocknende organische Bindemittel ausgewählt ist aus der Gruppe bestehend aus mindestens einem oxidativ trocknenden mittelöligen und/oder langöligen Epoxyesterharz, insbesondere einem oxidativ trocknenden langöligen Epoxyesterharz, mindestens einem oxidativ trocknenden mittelöligen und/oder langöligen Alkydharz, insbesondere einem oxidativ trocknenden langöligen Alkydharz, mindestens einem oxidativ trocknenden modifizierten, insbesondere Isocyanat-modifizierten, mittelöligen und/oder langöligen Alkydharz, insbesondere einem oxidativ trocknenden modifizierten langöligen Alkydharz, und einer beliebigen Mischung hiervon und insbesondere einen oxidativ trocknenden langöligen Epoxyesterharz darstellt.

5. Beschichtungsmasse nach einem der vorangehenden Ansprüche, ferner umfassend mindestens einen Acrylharz (Komponente i)), insbesondere mit einer Glasübergangstemperatur größer 75°C, und/oder mindestens einen modifizierten Acrylharz, insbesondere mit einer Glasübergangstemperatur größer 75°C, und/oder mindestens einen gesättigten Polyesterharz und/oder mindestens einen ungesättigten Polyesterharz.

6. Beschichtungsmasse nach einem der vorangehenden Ansprüche, ferner umfassend mindestens einen Füllstoff (Komponente j)), insbesondere ausgewählt aus der Gruppe bestehend aus Calciumcarbonat, insbesondere natürliches Calciumcarbonat, Dolomit, Silikaten, insbesondere Schichtsilikaten ausgewählt aus der Gruppe bestehend aus Talkum, insbesondere plättchenförmigem Talkum, Glimmer, vorzugsweise mikronisiertem Glimmer, Feldspat, Pyrophyllit, Serpentin, Kaolinit und deren Mischungen, Bariumsulfat, insbesondere synthetisches Bariumsulfat, und einer beliebigen Mischung hiervon, und/oder mindestens ein Farbmittel (Komponente k)), vorzugsweise mindestens ein Pigment, insbesondere Titandioxid und/oder Aluminium-Pigmente, und/oder Aluminiumflakes.

7. Beschichtungsmasse nach einem der vorangehenden Ansprüche, ferner umfassend
1) mindestens ein Korrosionsschutzpigment, insbesondere Calciumaluminiumphosphatsilikathydrat, Eisenglimmer und/oder Zinkoxid.

8. Beschichtungsmasse nach einem der vorangehenden Ansprüche, **dadurch gekennzeichnet, dass**
das Lösemittel mindestens einen, insbesondere im Wesentlichen aromatenfreien, aliphatischen Kohlenwasserstoff, vorzugsweise ausgewählt aus der Gruppe bestehend aus, insbesondere entaromatisiertem, Testbenzin, n-Paraffinen, Isoparaffinen, Cycloparaffinen und beliebigen Mischungen hiervon, und gegebenenfalls Methoxypropoxypropanol umfasst oder hieraus besteht.

9. Beschichtungsmasse nach einem der vorangehenden Ansprüche, **dadurch gekennzeichnet, dass**
das Additiv ausgewählt ist aus der Gruppe bestehend aus Verdickern, Entschäumern, Mattierungsmitteln, insbesondere Fällungskieselsäure, Lichtschutzmitteln, Radikalfängern, Netzmitteln, Dispergiermitteln, Oberflächenadditiven, insbesondere Silikonoberflächenadditiven, beispielsweise polyethermodifiziertes Polymethylalkylsiloxan und/oder Silikonpolyether-Copolymere, Wachse und/oder oberflächenaktive Polyacrylate, und beliebigen Mischungen dieser Verbindungen und/oder dass das Rheologiemodifizierungsmittel ausgewählt ist aus der Gruppe bestehend aus Schichtsilikaten ausgewählt aus der Gruppe bestehend aus Bentoniten, modifizierten Schichtsilikaten, insbesondere organisch modifizierten Schichtsilikaten, thioxotropen Alkydharzen und beliebigen Mischungen hiervon.

10. Beschichtungsmasse nach einem der vorangehenden Ansprüche, **dadurch gekennzeichnet, dass**
diese im Wesentlichen frei von Primärtrocknern und Sekundärtrocknern auf Cobalt-, Barium- und/oder Blei-Basis ist.

11. Beschichtungsmasse nach einem der Ansprüche 4 bis 10, **dadurch gekennzeichnet, dass**
der Langölanteil der langöligen Epoxyesterharze und/oder der oxidativ trocknenden langöligen Alkydharze auf Linolsäure, Linolensäure und/oder Ölsäure, gegebenenfalls unter Zusatz von Palmitinsäure, insbesondere auf Linolsäure, Linolensäure und Ölsäure unter Zusatz von Palmitinsäure, basiert und/oder dass der Mittelölanteil der mittelöligen Epoxyesterharze und/oder der oxidativ trocknenden mittelöligen Alkydharze auf Linolsäure, Linolensäure und/oder Ölsäure, gegebenenfalls unter Zusatz von Palmitinsäure, insbesondere auf Linolsäure, Linolensäure und Ölsäure unter Zusatz von Palmitinsäure, basiert.

12. Beschichtungsmasse nach einem der vorangehenden Ansprüche, **dadurch gekennzeichnet, dass**
das erste Hautverhinderungsmittel eine Verdunstungszahl (VD) nach DIN 53170 (bei 20°C und 65 ±5 % relativer Luftfeuchtigkeit mit Diethylether als Bezugsstoffs) größer 200, bevorzugt größer 500 und besonders bevorzugt größer 1000 aufweist und/oder dass das zweite Hautverhinderungsmittel eine Verdunstungszahl (VD) nach DIN 53170 (bei 20°C und 65 ±5 % relativer Luftfeuchtigkeit mit Diethylether als Bezugsstoffs) kleiner oder gleich 140, vorzugsweise kleiner oder gleich 75 und besonders bevorzugt kleiner oder gleich 40 aufweist.

13. Beschichtungsmasse nach einem der vorangehenden Ansprüche, **dadurch gekennzeichnet, dass**
das erste Hautverhinderungsmittel ausgewählt ist aus der Gruppe bestehend aus substituierten Phenolen, Dialkylaminoethanol, insbesondere Dimethylaminoethanol und/oder Diethylaminoethanol, Dialkylhydroxylamin, insbesondere Dimethylhydroxylamin und/oder Diethylhydroxylamin, Dibenzylhydroxylamin, Hydroxylamin, Diethylamin, Triethylamin und beliebigen Mischungen hiervon und/oder dass
das zweite Hautverhinderungsmittel Ketoxime, insbesondere Acetonoxim, Butanonoxim und/oder Pentanonoxim, umfasst.

14. Beschichtungsmasse nach einem der vorangehenden Ansprüche, **dadurch**
**gekennzeichnet, dass**
der Anteil an dem ersten Primärtrockner, in Bezug auf dessen Metallanteil, im Bereich von 0,0001 bis 0,1 Gewichtsprozent, bevorzugt im Bereich von 0,0005 bis 0,05 Gewichtsprozent und besonders bevorzugt im Bereich von 0,001 bis 0,01 Gewichtsprozent liegt, jeweils bezogen auf das Gesamtgewicht an oxidativ trocknendem organischen Bindemittel, und/oder dass
der Anteil an dem zweiten Primärtrockner, in Bezug auf dessen Metallanteil, im Bereich von 0,0001 bis 1,0 Gewichtsprozent, bevorzugt im Bereich von 0,0005 bis 0,5 Gewichtsprozent und besonders bevorzugt im Bereich von 0,001 bis 0,05 Gewichtsprozent liegt, jeweils bezogen auf das Gesamtgewicht an oxidativ trocknendem organischen Bindemittel, und/oder dass
der Anteil an dem mindestens einen ersten Sekundärtrockner umfassend oder bestehend aus mindestens einem organischen Salz des Zirkoniums, Strontiums, Bariums, Lithiums und/oder Aluminiums, in Bezug auf dessen Metallanteil, im Bereich von 0,01 bis 3,0 Gewichtsprozent, bevorzugt im Bereich von 0,05 bis 2,0 Gewichtsprozent und besonders bevorzugt im Bereich von 0,1 bis 1,5 Gewichtsprozent liegt, jeweils bezogen auf das Gesamtgewicht an oxidativ trocknendem organischen Bindemittel, und/oder dass
der Anteil an dem mindestens einen zweiten Sekundärtrockner umfassend oder bestehend aus mindestens einem organischen Salz des Calciums, Zinks und einer beliebigen Mischung, in Bezug auf dessen Metallanteil, hiervon im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht an oxidativ trocknendem organischen Bindemittel, und/oder dass
der Anteil an dem mindestens einen ersten Hautverhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht der Beschichtungsmasse, und/oder dass
der Anteil an dem mindestens einen zweiten HautVerhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0
Gewichtsprozent liegt, jeweils bezogen auf das Gesamtgewicht der Beschichtungsmasse, und/oder das der Anteil an Lösemittel im Bereich von 10 bis 50 Gewichtsprozent, bevorzugt 10 bis 40 Gewichtsprozent und besonders bevorzugt 15 bis 35 Gewichtsprozent liegt, jeweils bezogen auf das Gesamtgewicht der Beschichtungsmasse,
wobei die Anteile der die Beschichtungsmasse bildenden Komponenten jeweils stets 100 Gewichtsprozent ergeben.

15. Beschichtungssystem enthaltend oder gebildet aus
mindestens einer Beschichtungsmasse nach einem der vorangehenden Ansprüche und mindestens einer lösungsmittelhaltigen Farbtonpaste.

16. Beschichtung auf einem Substrat, erhalten oder erhältlich durch Auftragen und physikalisches und chemisches Trocknen der Beschichtungsmasse gemäß einem der Ansprüche 1 bis 14 oder des Beschichtungssystems nach Anspruch 15.

17. Beschichtung nach Anspruch 16, **dadurch gekennzeichnet, dass**
diese über eine durchschnittliche Trockenschichtdicke, bestimmt nach DIN EN ISO 2808-2 (Mai 2007), im Bereich von 10 bis 150 µm, bevorzugt im Bereich von 20 bis 120 µm und besonders bevorzugt im Bereich von 30 bis 90 µm verfügt.

18. Beschichtung nach Anspruch 16 oder 17, **dadurch gekennzeichnet, dass**
die Pigment-Volumen-Konzentration im Bereich von 15 bis 60 %, vorzugsweise im Bereich von 20 bis 50 % und besonders bevorzugt im Bereich von 30 bis 45 % liegt.

19. Kit-of-parts für ein Beschichtungssystem, insbesondere nach Anspruch 15, umfassend
mindestens eine Beschichtungsmasse nach einem der Ansprüche 1 bis 14 und mindestens eine lösungsmittelhaltige Farbtonpaste.

20. Verwendung der Beschichtungsmasse nach einem der Ansprüche 1 bis 14 oder des Beschichtungssystems nach Anspruch 15 oder des Kit-of-parts gemäß Anspruch 19 als oder für die Herstellung von Bauten-, Korrosionsschutz-, Industrie-, Maler- oder Maschinenlacken, insbesondere als oder für die Herstellung von Bauten-, Korrosionsschutz- oder Malerlacken.

## Claims

1. A solvent-containing coating composition for lacquer coatings, containing or consisting of
a) at least one oxidatively drying organic binder,
b1) at least one first primary drying agent based on iron, in particular comprising or consisting of at least one complex compound of iron, in particular a complex salt of iron,
b2) at least one second primary drying agent based on manganese, in particular comprising or consisting of a complex compound of manganese, in particular a complex salt of manganese,
c1) at least one first secondary drying agent, comprising or consisting of at least one organic salt of zirconium and/or strontium,
d1) at least one first anti-skinning agent, and
d2) at least one second anti-skinning agent, which second anti-skinning agent has a higher vapour pressure than the first anti-skinning agent at 20°C,
e) optionally at least one additive,
further comprising ligands which are able to complex iron and/or manganese species and are selected from at least one mono-, di-, tri-, tetra-, penta- and/or hexadentate nitrogen donor ligand.

2. The coating composition according to Claim 1, further comprising
c2) at least one second secondary drying agent, comprising or consisting of at least one organic salt of calcium, zinc and any mixture thereof.

3. The coating composition according to Claim 1 or 2, further comprising
f) at least one rheology modifier, and/or
g) at least one iron complex ligand, and/or
h) at least one manganese complex ligand.

4. The coating composition according to any one of the preceding claims, **characterized in that**
the oxidatively drying organic binder is selected from the group consisting of at least one oxidatively drying middle oil and/or long oil epoxy ester resin, in particular an oxidatively drying long oil epoxy ester resin, at least one oxidatively drying middle oil and/or long oil alkyd resin, in particular an oxidatively drying long oil alkyd resin, at least one oxidatively drying modified, in particular isocyanate-modified, middle oil and/or long oil alkyd resin, in particular an oxidatively drying modified long oil alkyd resin, and any mixture thereof, and is in particular an oxidatively drying long oil epoxy ester resin.

5. The coating composition according to any one of the preceding claims, further comprising at least one acrylic resin (component i), in particular having a glass transition temperature greater than 75°C, and/or at least one modified acrylic resin, in particular having a glass transition temperature greater than 75°C, and/or at least one saturated polyester resin and/or at least one unsaturated polyester resin.

6. The coating composition according to any one of the preceding claims, further comprising at least one filler (component j), in particular selected from the group consisting of calcium carbonate, in particular natural calcium carbonate, dolomite, silicates, in particular phyllosilicates selected from the group consisting of talc, in particular lamellar talc, mica, preferably micronized mica, feldspar, pyrophyllite, serpentine, kaolinite and their mixtures, barium sulfate, in particular synthetic barium sulfate, and any mixture thereof, and/or at least one colourant (component k), preferably at least one pigment, in particular titanium dioxide and/or aluminium pigments, and/or aluminum flakes.

7. The coating composition according to any one of the preceding claims, further comprising 1) at least one anti-corrosion pigment, in particular calcium aluminium phosphate silicate hydrate, micaceous iron oxide and/or zinc oxide.

8. The coating composition according to any one of the preceding claims, **characterized in that**
the solvent comprises or consists of at least one aliphatic hydrocarbon, which is in particular substantially free from aromatic compounds and is preferably selected from the group consisting of white spirit, in particular dearomatized white spirit, n-paraffins, isoparaffins, cycloparaffins and any mixtures thereof, and optionally methoxypropoxypropanol.

9. The coating composition according to any one of the preceding claims, **characterized in that**
the additive is selected from the group consisting of thickeners, defoaming agents, flatting agents, in particular precipitated silica, UV-stabilizers, radical scavengers, wetting agents, dispersing agents, surface additives, in particular silicone surface additives, for example polyether-modified polymethylalkylsiloxane and/or silicone polyether copolymers, waxes and/or surface-active polyacrylates and any mixtures of these compounds, and/or **in that** the rheology modifier is selected from the group consisting of phyllosilicates, selected from the group consisting of bentonites, modified phyllosilicates, in particular organically modified phyllosilicates, thixotropic alkyd resins and any mixtures thereof.

10. The coating composition according to any one of the preceding claims, **characterized in that**
it is substantially free from primary drying agents and secondary drying agents based on cobalt, barium and/or lead.

11. The coating composition according to any one of Claims 4 to 10, **characterized in that**
the long oil portion of the long oil polyester resins and/or of the oxidatively drying long oil alkyd resins is based on linoleic acid, linolenic acid and/or oleic acid to which optionally palmitic acid is added, in particular on linoleic acid, linolenic acid and oleic acid to which palmitic acid is added, and/or **in that** the middle oil portion of the middle oil epoxy ester resins and/or of the oxidatively drying middle oil alkyd resins is based on linoleic acid, linolenic acid and/or oleic acid, to which optionally palmitic acid is added, in particular on linoleic acid, linolenic acid and oleic acid to which palmitic acid is added.

12. The coating composition according to any one of the preceding claims, **characterized in that**
the first anti-skinning agent has an evaporation rate (VD) according to DIN 53170 (at 20°C and 65 ±5% relative humidity, with diethyl ether as a reference substance) greater than 200, preferably greater than 500 and particularly preferred greater than 1000, and/or **in that** the second anti-skinning agent has an evaporation rate (VD) according to DIN 53170 (at 20°C and 65 ±5% relative humidity, with diethyl ether as a reference substance) less than or equal to 140, preferably less than or equal to 75 and particularly preferred less than or equal to 40.

13. The coating composition according to any one of the preceding claims, **characterized in that**
the first anti-skinning agent is selected from the group consisting of substituted phenols, dialkylaminoethanol, in particular dimethylaminoethanol and/or diethylaminoethanol, dialkylhydroxylamine, in particular dimethylhydroxylamine and/or diethylhydroxylamine, dibenzylhydroxylamine, hydroxylamine, diethylamine, triethylamine and any mixtures thereof, and/or **in that**
the second anti-skinning agent comprises ketoximes, in particular acetonoxime, butanonoxime and/or pentanonoxime.

14. The coating composition according to any one of the preceding claims, **characterized in that**
the proportion of the first primary drying agent, in relation to the metal proportion thereof, is in the range from 0.0001 to 0.1 percent by weight, preferably in the range from 0.0005 to 0.05 percent by weight and particularly preferred in the range from 0.001 to 0.01 percent by weight, relative to the total weight of oxidatively drying organic binder in each case, and/or **in that** the proportion of the second primary drying agent, in relation to the metal proportion thereof, is in the range from 0.0001 to 1.0 percent by weight, preferably in the range from 0.0005 to 0.5 percent by weight and particularly preferred in the range from 0,001 to 0.05 percent by weight, relative to the total weight of oxidatively drying organic binder in each case, and/or **in that** the proportion of the at least one first secondary drying agent comprising or consisting of at least one organic salt of zirconium, strontium, barium, lithium and/or aluminium, in relation to the metal proportion thereof, is in the range from 0.01 to 3.0 percent by weight, preferably in the range from 0.05 to 2.0 percent by weight and particularly preferred in the range from 0.1 to 1.5 percent by weight, relative to the total weight of oxidatively drying organic binder in each case, and/or **in that**
the proportion of the at least one second secondary drying agent comprising or consisting of at least one organic salt of calcium, zinc and any mixture thereof, in relation to the metal proportion thereof, is in the range from 0.001 to 5.0 percent by weight, preferably in the range from 0.01 to 3.0 percent by weight and particularly preferred in the range from 0.1 to 1.0 percent by weight, relative to the total weight of oxidatively drying organic binder in each case, and/or **in that**
the proportion of the at least one first anti-skinning agent is in the range of 0.001 to 5.0 percent by weight, preferably in the range from 0.01 to 3.0 percent by weight and particularly preferred in the range from 0.1 to 1.0 percent by weight, relative to the total weight of the coating composition in each case, and/or **in that**
the proportion of the at least one second anti-skinning agent is in the range from 0.001 to 5.0 percent by weight, preferably in the range from 0.01 to 3.0 percent by weight and particularly preferred in the range from 0.1 to 1.0 percent by weight, relative to the total weight of the coating composition in each case, and/or **in that**
the proportion of solvent is in the range from 10 to 50 percent by weight, preferably 10 to 40 percent by weight and particularly preferred 15 to 35 percent by weight, relative to the total weight of the coating composition in each case,
wherein the proportions of the components forming the coating composition add up to 100 percent by weight in each case.

15. A coating system containing or composed of
at least one coating composition according to any one of the preceding claims and at least one solvent-containing colouring paste.

16. A coating on a substrate, obtained or obtainable by applying and physical or chemical drying of the coating composition according to any one of Claims 1 to 14 or of the coating system according to Claim 15.

17. The coating according to Claim 16, **characterized in that**
it has an average dry layer thickness, determined according to DIN EN ISO 2808-2 (May 2007), in the range from 10 to 150 µm, preferably in the range from 20 to 120 µm and particularly preferred in the range from 30 to 90 µm.

18. The coating according to Claim 16 or 17, **characterized in that**
the pigment volume concentration is in the range from 15 to 60%, preferably in the range from 20 to 50% and particularly preferred in the range from 30 to 45%.

19. A kit of parts for a coating system, in particular according to Claim 15, comprising
at least one coating composition according to any one of Claims 1 to 14 and at least one solvent-containing colouring paste.

20. Use of the coating composition according to any one of Claims 1 to 14 or of the coating system according to Claim 15 or of the kit of parts according to Claim 19 as or for the manufacture of building, anti-corrosion, industrial, painter or machine lacquers, in particular as or for the manufacture of building, anti-corrosion or painter lacquers.

## Revendications

1. Masse de revêtement à base de solvant pour revêtements de peinture, contenant, ou composée
a) d'au moins un liant organique séchant par oxydation,
b1) d'au moins un premier siccatif primaire à base de fer, comprenant en particulier, ou composé en particulier d'au moins un composé complexe du fer, en particulier d'un sel complexe du fer,
b2) d'au moins un deuxième siccatif primaire à base de manganèse, comprenant en particulier, ou composé en particulier d'un composé complexe du manganèse, en particulier d'un sel complexe du manganèse,
c1) d'au moins un premier siccatif secondaire comprenant, ou composé d'au moins un sel organique de zirconium et/ou de strontium,
d1) d'au moins un premier agent antipeau et
d2) d'au moins un deuxième agent antipeau, ledit deuxième agent antipeau présentant à 20 °C une pression de vapeur supérieure à celle du premier agent antipeau,
e) le cas échéant, d'au moins un additif,
comprenant en outre des ligands, aptes à complexer des éléments fer et/ou manganèse, et sélectionnés entre au moins un ligand donneur d'azote monodenté, bidenté, tridenté, tétradenté, pentadenté et/ou hexadenté.

2. Masse de revêtement selon la revendication 1, comprenant en outre
c2) au moins un deuxième siccatif secondaire comprenant, ou composé d'au moins un sel organique de calcium, de zinc et d'un mélange quelconque de ceux-ci.

3. Masse de revêtement selon la revendication 1 ou la revendication 2, comprenant en outre
f) au moins un modificateur de rhéologie et/ou
g) au moins un ligand complexe de fer et/ou
h) au moins un ligand complexe de manganèse.

4. Masse de revêtement selon l'une quelconque des revendications précédentes, **caractérisée en ce que**
le liant organique séchant par oxydation est sélectionné dans le groupe comprenant au moins une résine époxy-ester séchant par oxydation moyennement huileuse et/ou longue en huile, en particulier une résine époxy-ester séchant par oxydation longue en huile, au moins une résine alkyde séchant par oxydation moyennement huileuse et/ou longue en huile, en particulier une résine alkyde séchant par oxydation longue en huile, au moins une résine alkyde modifiée séchant par oxydation moyennement huileuse et/ou longue en huile, en particulier à modification isocyanate, en particulier une résine alkyde modifiée séchant par oxydation longue en huile, et un mélange quelconque de celles-ci, et représente en particulier une résine époxy-ester séchant par oxydation longue en huile.

5. Masse de revêtement selon l'une des revendications précédentes, comprenant en outre au moins une résine acrylique (composant i), en particulier avec une température de transition vitreuse supérieure à 75 °C, et/ou au moins une résine acrylique modifiée, en particulier avec une température de transition vitreuse supérieure à 75 °C, et/ou au moins une résine de polyester saturée et/ou au moins une résine de polyester insaturée.

6. Masse de revêtement selon l'une quelconque des revendications précédentes, comprenant en outre au moins un agent de charge (composant j), en particulier sélectionné dans le groupe composé de carbonate de calcium, en particulier carbonate de calcium naturel, dolomite, silicates, en particulier silicates lamellaires sélectionnés dans le groupe composé de talc, en particulier talc lamellaire, mica, de préférence mica micronisé, feldspath, pyrophyllite, serpentine, kaolinite et leurs mélanges, sulfate de baryum, en particulier sulfate de baryum synthétique, et un mélange quelconque de ceux-ci, et/ou au moins un colorant (composant k), de préférence au moins un pigment, en particulier oxyde de titane et/ou pigments d'aluminium, et/ou paillettes d'aluminium.

7. Masse de revêtement selon l'une quelconque des revendications précédentes, comprenant en outre 1) au moins un pigment protégeant contre la corrosion, en particulier hydrate de silicate de phosphate alumino-calcique, fer micacé et/ou oxyde de zinc.

8. Masse de revêtement selon l'une quelconque des revendications précédentes, **caractérisée en ce que**
le solvant comprend, ou est composé d'au moins un hydrocarbure aliphatique, en particulier sensiblement exempt d'aromates, de préférence sélectionné dans le groupe composé de white-spirit, en particulier désaromatisé, n-paraffines, isoparaffines, cycloparaffmes et des mélanges quelconques de celles-ci, et le cas échéant de méthoxypropoxypropanol.

9. Masse de revêtement selon l'une quelconque des revendications précédentes, **caractérisée en ce que**
l'additif est sélectionné dans le groupe composé d'épaississants, d'agents antimoussants, d'agents de matage, en particulier de silice précipitée, d'agents photoprotecteurs, piégeurs de radicaux, réticulants, dispersants, additifs de surface, en particulier additifs de surface siliconés, tels que polyméthylalkylsiloxane à modification polyéther et/ou copolymères de polyéther-silicone, cires et/ou polyacrylates tensioactifs, et mélanges quelconques de ces composés et/ou **en ce que** le modificateur de rhéologie est sélectionné dans le groupe composé de silicates lamellaires sélectionnés dans le groupe composé de bentonites, silicates lamellaires modifiés, en particulier silicates lamellaires organiquement modifiés, résines alkydes thixotropes et des mélanges quelconques de ceux-ci.

10. Masse de revêtement selon l'une quelconque des revendications précédentes, **caractérisée en ce que**
celle-ci est sensiblement exempte de siccatifs primaires et de siccatifs secondaires à bas de cobalt, de baryum et/ou de plomb.

11. Masse de revêtement selon l'une des revendications 4 à 10, **caractérisée en ce que**
la part longue en huile des résines époxy-ester longues en huile et/ou des résines alkydes séchant par oxydation longues en huile est à base d'acide linoléique, d'acide linolénique et/ou d'acide oléique, le cas échéant avec ajout d'acide palmitique, en particulier d'acide linoléique, d'acide linolénique et d'acide oléique avec ajout d'acide palmitique et/ou **en ce que** la part moyenne en huile des résines époxy-ester moyennes en huile et/ou des résines alkydes séchant par oxydation moyennes en huile est à base d'acide linoléique, d'acide linolénique et/ou d'acide oléique, le cas échéant avec ajout d'acide palmitique, en particulier d'acide linoléique, d'acide linolénique et d'acide oléique avec ajout d'acide palmitique.

12. Masse de revêtement selon l'une quelconque des revendications précédentes, **caractérisée en ce que**
le premier agent antipeau présente un indice d'évaporation (VD) suivant DIN 53170 (à 20 °C et 65 ± 5 % d'humidité relative avec l'éther diéthylique en tant que substance de référence) supérieur à 200, de préférence supérieur à 500 et plus particulièrement supérieur à 1000 et/ou **en ce que** le deuxième agent antipeau présente un indice d'évaporation (VD) suivant DIN 53170 (à 20 °C et 65 ± 5 % d'humidité relative avec l'éther diéthylique en tant que substance de référence) inférieur ou égal à 140, de préférence inférieur ou égal à 75 et plus particulièrement inférieur ou égal à 40.

13. Masse de revêtement selon l'une quelconque des revendications précédentes, **caractérisée en ce que**
le premier agent anti peau est sélectionné dans le groupe composé de phénols substitués, de dialkylaminoéthanol, en particulier de diméthylaminoéthanol et/ou de diéthylaminoéthanol, dialkylhydroxylamine, en particulier diméthylhydroxylamine et/ou diéthylhydroxylamine, dibenzylhydroxylamine, hydroxylamine, diéthylamine, triéthylamine et de mélanges quelconques de ceux-ci et/ou **en ce que**
le deuxième agent antipeau comprend des kétoximes, en particulier acétone oxime, butanone oxime et/ou pentanone oxime.

14. Masse de revêtement selon l'une quelconque des revendications précédentes, **caractérisée en ce que**
la part du premier siccatif primaire, comparativement à sa teneur en métal, est comprise entre 0,0001 et 0,1 % en poids, de préférence entre 0,0005 et 0,05 % en poids et plus particulièrement entre 0,001 et 0,01 % en poids, par rapport au poids total du liant organique séchant par oxydation, et/ou **en ce que** la part du deuxième siccatif primaire, comparativement à sa teneur en métal, est comprise entre 0,0001 et 1,0 % en poids, de préférence entre 0,0005 et 0,5 % en poids et plus particulièrement entre 0,001 et 0,05 % en poids, par rapport au poids total du liant organique séchant par oxydation, et/ou **en ce que**
la part dudit au moins un premier siccatif secondaire comprenant, ou composé d'au moins un sel organique de zirconium, strontium, baryum, lithium et/ou aluminium, comparativement à sa teneur en métal, est comprise entre 0,01 et 3,0 % en poids, de préférence entre 0,05 et 2,0 % en poids et plus particulièrement entre 0,1 et 1,5 % en poids, par rapport au poids total du liant organique séchant par oxydation, et/ou **en ce que**
la part dudit au moins un deuxième siccatif secondaire comprenant, ou composé d'au moins un sel organique de calcium, zinc et d'un mélange quelconque, comparativement à sa teneur en métal, est comprise entre 0,001 et 5.0 % en poids, de préférence entre 0,01 et 3,0 % en poids et plus particulièrement entre 0,1 et 1,0 % en poids, par rapport au poids total du liant organique séchant par oxydation, et/ou **en ce que**
la part dudit au moins un premier agent antipeau est comprise entre 0,001 et 5.0 % en poids, de préférence entre 0,01 et 3,0 % en poids et plus particulièrement entre 0,1 et 1,0 % en poids, par rapport au poids total de la masse de revêtement, et/ou **en ce que**
la part dudit au moins un deuxième agent antipeau est comprise entre 0,001 et 5.0 % en poids, de préférence entre 0,01 et 3,0 % en poids et plus particulièrement entre 0,1 et 1,0 % en poids, par rapport au poids total de la masse de revêtement, et/ou **en ce que**
la part de solvant est comprise entre 10 et 50 % en poids, de préférence entre 10 et 40 % en poids et plus particulièrement entre 15 et 35 % en poids, par rapport au poids total de la masse de revêtement,
les parts des composants formant la masse de revêtement donnant toujours un total de 100 % en poids.

15. Système de revêtement contenant, ou constitué d'au moins une masse de revêtement selon l'une quelconque des revendications précédentes et d'au moins une pâte colorante contenant un solvant.

16. Revêtement sur un substrat, obtenu ou pouvant être obtenu par application et séchage physique et chimique de la masse de revêtement selon l'une des revendications 1 à 14 ou du système de revêtement selon la revendication 15.

17. Revêtement selon la revendication 16, **caractérisé en ce que** celui-ci présente une épaisseur moyenne de film sec, déterminée suivant DIN EN ISO 2808-2 (mai 2007), comprise entre 10 et 150 µm, de préférence entre 20 et 120 µm et plus particulièrement entre 30 et 90 µm.

18. Revêtement selon la revendication 16 ou 17, **caractérisé en ce que**
la concentration volumique de pigment est comprise entre 15 et 60 %, de préférence entre 20 et 50 % et plus particulièrement entre 30 et 45 %.

19. Kit de pièces pour un système de revêtement, en particulier selon la revendication 15, comprenant
au moins une masse de revêtement selon l'une des revendications 1 à 14 et au moins une pâte colorante contenant un solvant.

20. Utilisation de la masse de revêtement selon l'une des revendications 1 à 14 ou du système de revêtement selon la revendication 15 ou du kit de pièces selon la revendication 19 en tant que peinture pour bâtiments, peinture de protection contre la corrosion, peinture industrielle, laque ou peinture pour machines, ou pour la fabrication de celles-ci, en particulier en tant que peinture pour bâtiments, peinture de protection contre la corrosion ou laque, ou pour la fabrication de celles-ci.
